# Europäisches Patentamt

## European Patent Office

## Office européen des brevets

(11) Publication number: **0 087 138**
**B1**

---

(12) **EUROPEAN PATENT SPECIFICATION**

(45) Date of publication of patent specification: **14.01.87**

(21) Application number: **83101565.6**

(22) Date of filing: **18.02.83**

(51) Int. Cl.⁴: **B 60 C 23/00, B 60 Q 1/00, B 60 S 1/00, B 60 R 16/02** // **B60Q5/00, H04B9/00, H01F23/00**

---

(54) **Power supply system for automotive parts having a rotary component.**

---

(30) Priority: **19.02.82 JP 24482/82**

(43) Date of publication of application:
**31.08.83 Bulletin 83/35**

(45) Publication of the grant of the patent:
**14.01.87 Bulletin 87/03**

(84) Designated Contracting States:
**DE FR GB**

(56) References cited:
**EP-A-0 016 991**
**EP-A-0 045 401**
**FR-A-2 305 723**
**FR-A-2 312 772**
**GB-A-2 065 896**
**GB-A-2 074 313**
**NL-A-8 002 446**
**US-A-3 462 735**

(73) Proprietor: **Hitachi, Ltd.**
**5-1, Marunouchi 1-chome**
**Chiyoda-ku Tokyo 100 (JP)**

(72) Inventor: **Endo, Akira**
**5-48, Bizenmachi**
**Mito-shi (JP)**
Inventor: **Hasegawa, Akira**
**2-11-12, Matsudocho**
**Katsuta-shi (JP)**
Inventor: **Shibata, Takanori**
**2311-15, Onumacho**
**Hitachi-shi (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a power supply system for supplying power to automotive parts having a rotary component according to the preambles of the independent claims 1 and 6.

A power supply system according to the preamble of claim 1 is known from the EP—A— 0 045 401.

In this known system the air pressure in a tire is converted into an alternate signal transmitted to the vehicle body through a coupling capacitor and a rotary transformer. In the vehicle body, the signal is divided by a high-pass filter and abnormal air pressure in the tire can be detected by using the divided signal. Furthermore, the frequency of the pressure frequency transformer in the secondary coil is several times as large as the driving frequency in the primary coil of the rotary transformer. Although the rotary transformer of the citation is used as a coupling equipment for supplying the electric power, the magnitude of the power is not controlled.

A system according to the preamble of claim 6 is known from the GB—A—2 074 313.

Signals from a plurality of switches on a steering wheel are optically transmitted to a vehicle body through a light-transmitting ring. A power supply is applied to the circuit within the wheel and to a light emitting diode from the side of the vehicle's body by using a conventional slip ring.

A conventional power supply system for the automotive parts having a rotary component will be described below with reference to a steering column and a tire air pressure alarm.

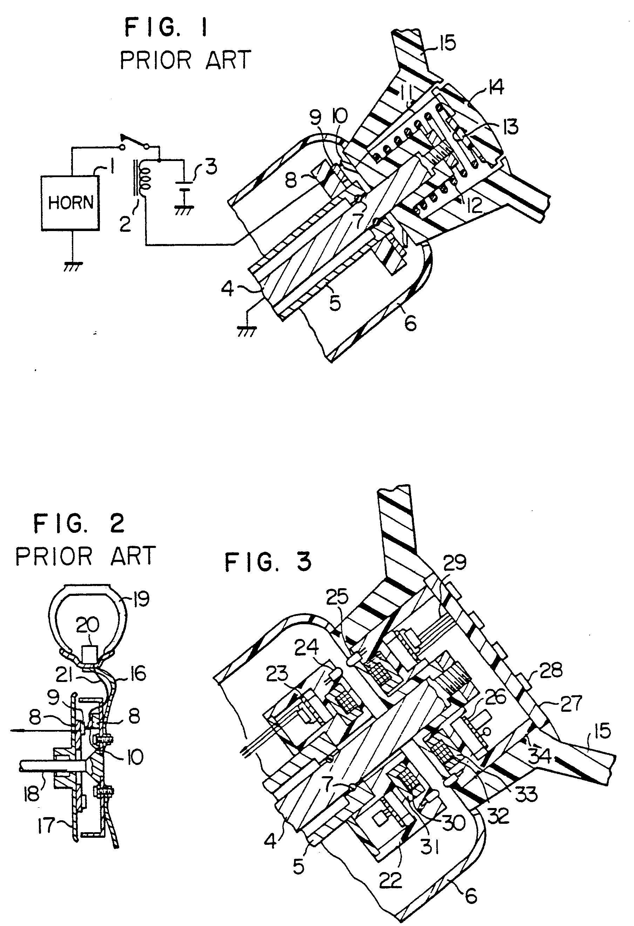

A conventional steering column has a construction as shown in Fig. 1. A steering wheel 15 providing a rotary component includes a horn button 14 which is normally urged upward by a spring 12. The horn button 14 carries a contact plate 13 which is connected with a brush 10 through a wire 11. The brush 10 is in contact with a slip ring 9 on an insulating plate 8 mounted on a steering column tube 5 on the outer periphery of a steering shaft 4. The slip ring 9, which is annular in shape, is so constructed that, when the horn button 14 mounted on the steering wheel 15 rotates with the steering wheel 15, the connection between the horn relay 2 connected with the slip ring 9 and the contact plate 13 is maintained. A steering cover 6 is mounted on the outer periphery of the steering column tube 5. The horn relay 2 is connected with a battery 3, which in turn is connected to a horn 1 through a horn relay contact.

A conventional tire air pressure alarm has a construction as shown in Fig. 2. Specifically, a pressure sensor 20 mounted in a tire 19 is connected to a brush 10 through a wire along a wheel hub 16 for supporting the tire 19. The brush 10 is in contact with a slip ring 9 on an insulating plate provided on a bracket 17 mounted on a drive shaft 18. The slip ring 9 is kept in contact with the brush during the rotation of the tire 19.

In this conventional slip ring, though simple in construction, the fact that power is supplied taking advantage of the sliding of the brush often causes an electrical noise or contact failure, thus leading to a false actuation of the system or an inferior wear resistance.

In addition to the problem of wear resistance of the slip ring and the brush in the tire air pressure alarm, demand is high for a switch which controls a multiplicity of signals (such as a headlight turn-on signal, a wiper start signal, etc.) on the steering wheel. If such a switch is incorporated in the conventional system, the slip ring is required to be used in multiple way, thereby leading to a number of problems including cost, size, electrical noise and reliability. In order to cope with this difficulty, a multiple transmission system based on the time-sharing system has been developed. This multiple transmission system, in which the slip ring involves only a power line and a signal line, is easily affected by external noises due to the higher frequency of signals processed including the electrical noise caused in the slip ring of the power line and the chattering generated in the slip ring of the signal line.

Efforts have so far been made to eliminate the leading wires by use of light or electromagnetic induction for signal transmission of the rotary components. Unless the leading wires for the power line are eliminated, however, the reliability and endurance of the transmission system are adversely affected, thus making the wireless transmission of signals useless. Especially, a tire air pressure alarm, which has been developed for use without leading wires and includes a dry cell battery as a power supply of the transmission device on tire side, poses the practical problem of battery discharge.

Accordingly, it is an object of the present invention to obviate the above-mentioned disadvantage and to provide a reliable and durable power supply system for the automotive parts having a rotary component.

The above object is solved in systems according to the preamble of claim 1 and claim 6, respectively by the characterizing parts of the claims 1 and 6.

The subclaims 2 to 5 characterize advantageous developments of the claim 1. The subclaims 7 to 9 characterize advantageous developments of claim 6.

An embodiment of the present invention will be explained below with reference to the drawings.

Fig. 3 is a sectional view schematically showing a steering column according to an embodiment of the present invention;

Fig. 4 is a sectional view schematically showing a steering column according to another embodiment of the present invention;

Fig. 5 is a schematic sectional view for explaining the principle of power supply according to the present invention;

Fig. 6 is a diagram showing a circuit example of a general converter;

Fig. 7 is a diagram showing an embodiment of the circuit according to the present invention;

Figs. 8a to 8g are timing charts for the circuit of Fig. 7;

Fig. 9 is a diagram showing another embodiment of the circuit according to the present invention;

Figs. 10a to 10g are timing charts for the circuit of Fig. 9;

Figs. 11a and 11b are sectional views showing shapes of the core of the power supply system according to other embodiments of the present invention;

Fig. 12 is a sectional view schematically showing another embodiment of the present invention including a modification of the signal transmitterreceiver thereof; and

Fig. 13 is a perspective view of the recesses 45, 46 shown in Fig. 12.

In Fig. 3, the same component elements as those in Fig. 1 will be designated by the same reference numerals.

As shown, a steering shaft 4 is fixed to the car body by a steering column tube 5, and a steering wheel 15 is mounted at the edge of the steering shaft 4. A pot-like rotor core 33 of such a magnetic material as ferrite is arranged around the steering shaft 4 on the steering wheel side (hereinafter referred to as the rotor side). A stator core 31, in opposed relation to the rotor core 33, is also arranged around the steering shaft 4 on the stationary side (hereinafter referred to as the stator side). The rotor core 33 has a rotor coil 32 wound thereon, and the stator core 31 has the stator coil 30 wound thereon. In this embodiment, the rotor core 33 is fixed by a rotor mold case 34 of resin or the like, which contains a rectifier section for rectifying and converting the AC voltage generated in the rotor coil 32 into a DC voltage and a control circuit 26 for sending a serial signal out from an LED (light-emitting diode) 25 the signal of a push switch 28 on a keyboard 27 mounted on the steering wheel 15. On the stator side, a stator mold case 22 similarly contains a drive circuit for driving the stator coil 30 in AC fashion and a drive circuit 23 for processing the optical signal received from the rotor side by a photo transistor 24. Instead of light used in this embodiment as communication means, electromagnetic induction, ultrasonic wave or other means capable of transmitting signals without leading wires may be used with equal effect.

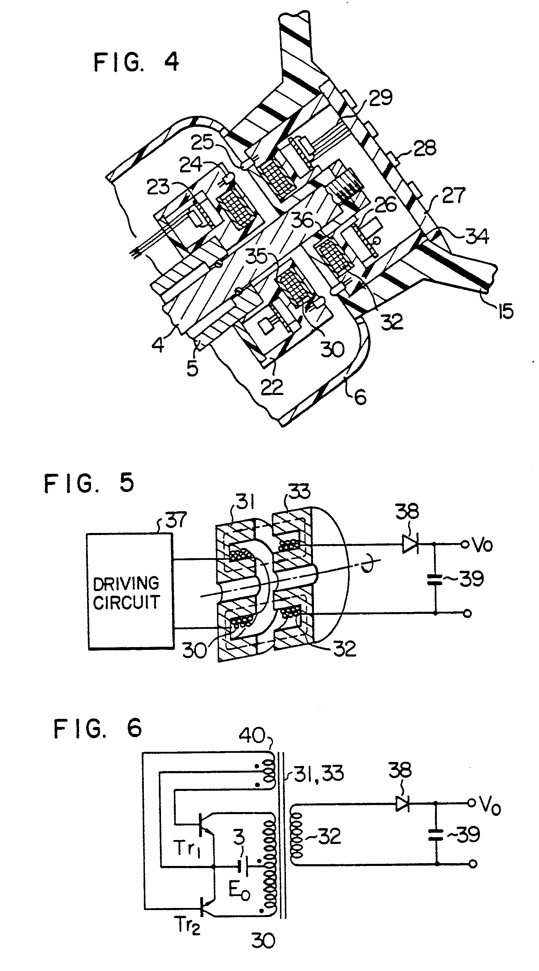

Another embodiment of the present invention is shown in Fig. 4. In this embodiment, the rotor core 33 and the stator core 31 of Fig. 3 are eliminated so that the coupling efficiency between the coils is lower than in the preceding embodiment, thus reducing the power transmission efficiency. Nevertheless, as far as less power is supplied to the rotor side, this construction is possible and lower in cost. It is obvious that the distance between the rotor coil 32 and the stator coil 30 in Figs. 3 and 4, which is about 1 mm for instance, should be as short as possible in order to increase the coupling efficiency of the magnetic fields.

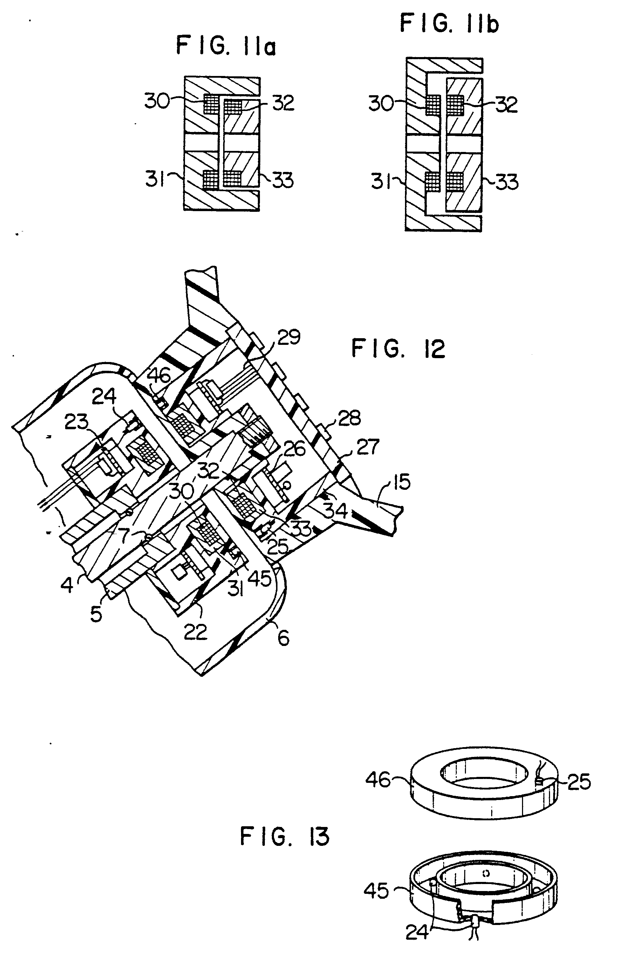

An example of the construction of the rotor core 33 and the stator core 31 described above is shown in Fig. 5, with reference to which the principle of the power supply system according to the present invention will be explained. The magnetic paths of the two coils are as shown by dotted line, and undergo no structural change by the rotation of the rotor core 33, resulting in the coupling degree of the magnetic fields being not changed. In order for the rotor core 33 and the stator core 31 to function as a DC/DC converter, it is necessary to convert the DC voltage of the automotive battery into an AC voltage and apply it to the stator coil 30. This requires a driving circuit 37, and a rectifier circuit including a rectifying diode 38 and a capacitor 39 for converting the AC voltage generated in the rotor coil 32 into a DC voltage. Fig. 6 shows an example of the circuit suitable as the DC/DC converter, which is called the Royer's circuit. In applying this circuit to the present invention, a control coil 40 is additionally wound to the stator coil 30 thereby to make self-excited oscillation possible. Various other circuits are available as the DC/DC converter and may be used for the same purpose. Further, various modifications of the shape of the cores including those shown in Figs. 11a and 11b are conceivable in order to increase the coupling efficiency of the magnetic fields. Apart from the power supply system explained above for the steering device, a similar system may be used for the tire air pressure alarm.

When power is transmitted by transformer coupling as in the present invention, an excitation loss naturally occurs. Although the above-described embodiment does not pose any problem in the case of a tire air pressure alarm or the like which is operated only when the ignition key of the automobile is turned on, it is necessary to continue to supply power to the system on rotor side even when the ignition key is turned off in the case of the horn switch of the steering device which is desirably operated in the off state of the ignition key, resulting in the battery being consumed unnecessarily. If the device on rotor side is comprised of integrated circuits such as CMOS involving a small operating current, the power consumption of the device is easily controlled to about 1 mA. However, the problem of the excitation loss of the transformer still remains unsolved.

The optical communication using an LED as in an embodiment of the present invention generally requires the drive current of about 20 mA which in turn requires a transformer of a sufficient capacity to transmit the current. The excitation loss of a transformer in a closed loop is generally approximately 20% of the power supplied. This figure possibly increases to about 50% for the system having a gap between the cores as in the present invention. If the system according to the invention is kept actuated when the ignition key is off, therefore, the current of about 20 mA is required as the excitation loss depending on the design including the core shape and gap between the cores, with the result that a battery of about 35 Ah in capacity will discharge within two months.

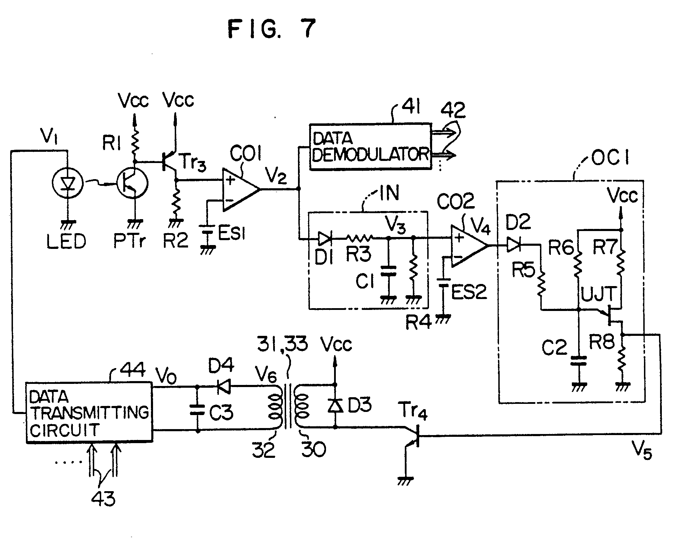

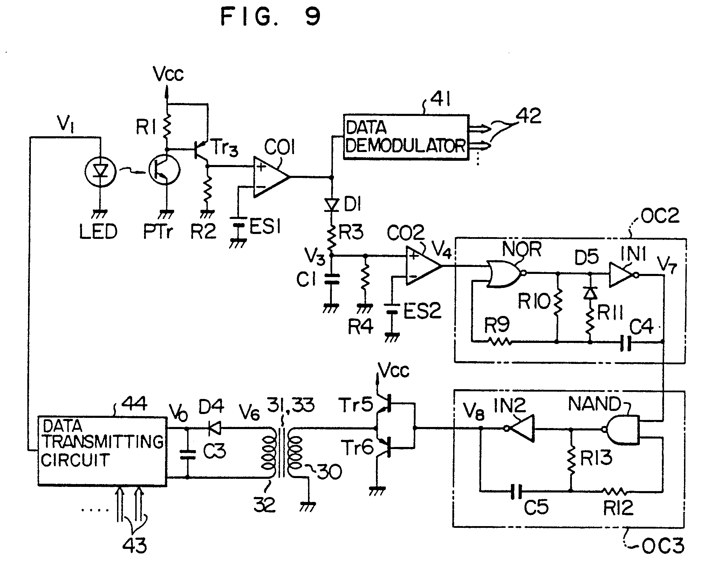

In view of this, a system shown in Fig. 7 or 9 is added in the invention as a means for obviating the above-mentioned problem.

This system takes advantage of the fact that under stand-by conditions in the absence of an input signal, that is, under normal conditions, the drive current of the LED is reduced to zero and therefore the operating current of only about 1 mA is required for the control circuit 26. Normally, therefore, the transformer is excited to such an extent that the power of about 1 mA in terms of current is supplied, whereas in the presence of a light input, a large current begins to be supplied.

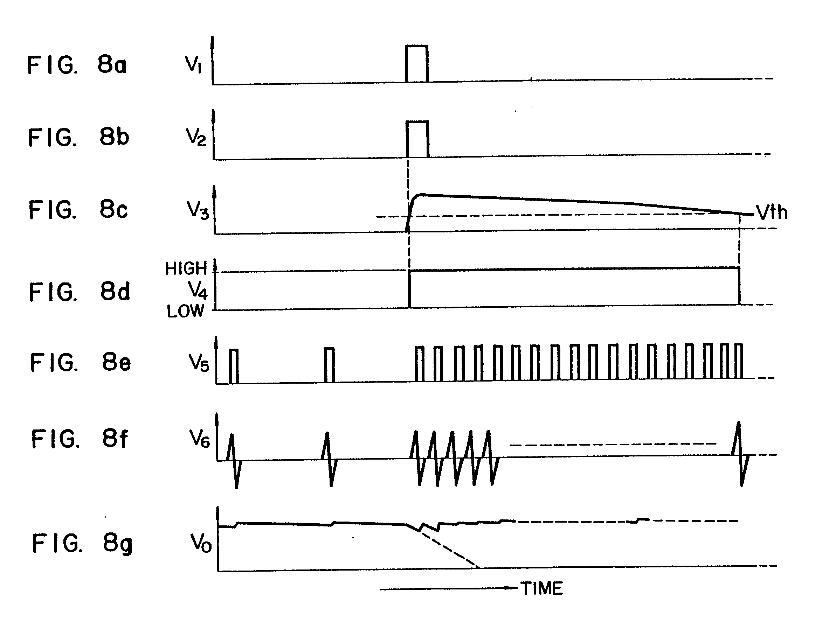

This embodiment will be explained with reference to Figs. 8a to 8g. A uni-junction transistor UJT generates a pulse with a duty factor of about 1% and a long period of about one second, which pulse is used to excite the stator coil 30, whereby power is supplied to a data transmission circuit on the rotor side. The data transmission circuit 44 is of a well-known construction including a CMOS or the like. Upon application of a data input 43 such as a horn signal or a headlight turn-on signal to the data transmission circuit 44, the LED is driven, so that a large current flows thereby to discharge the capacitor C3, thus causing the source voltage $V_0$ to be reduced sharply. The light emitted by the LED is received by the photo transistor PTr on the stator side, shaped to a pulse waveform at a comparator CO1, and then at an integrated circuit section IN, shaped into the waveform as shown by $V_3$ of Fig. 8(C). This voltage $V_3$ is applied to a comparator CO2 with the treshold level of Vth. Even after the optical signal is extinguished, the output of the comparator CO2 remains "high" for a predetermined time and reduces the time constant of the oscillator circuit of the uni-junction transistor UJT, so that the number of excitations of the stator coil 30 is increased thereby to prevent the supply voltage $V_0$ from being decreased. By doing so, only a small current is required normally or during the time when the duty factor is about 1%, while the drive current of about 20 mA is applied only when an input signal is obtained, with the result that the average current of about 0.2 mA is involved, thus solving the problem of the battery being consumed unnecessarily.

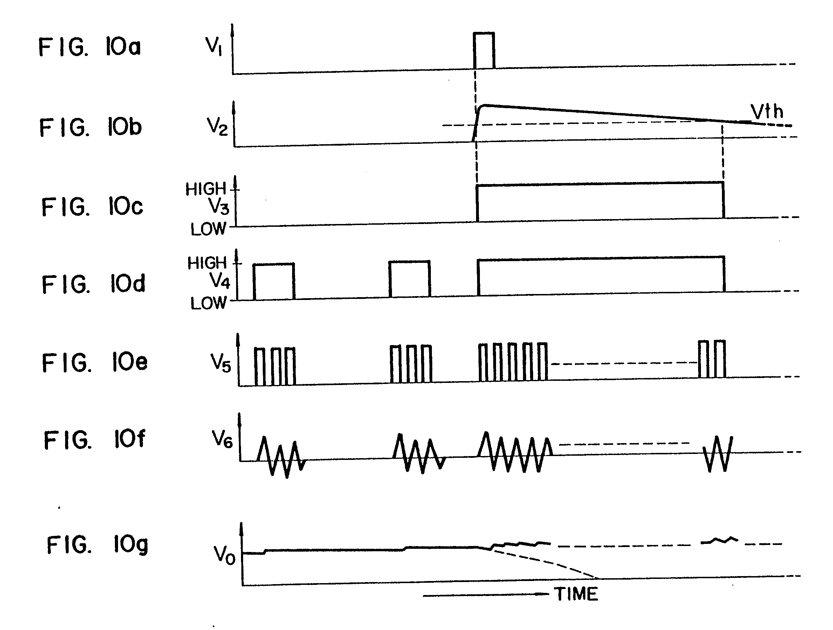

Fig. 9 shows another embodiment of the circuit according to the present invention, and Figs. 10a to 10g are timing charts for the circuit of Fig. 9. The circuit of Fig. 9 is for duty factor control similar to the circuit of Fig. 7 and has a different construction of the oscillator circuit. The operation of the oscillator circuit will be explained.

The oscillator circuit OC2 oscillates when the output $V_4$ of the comparator CO2 is "low", at which time the duty factor is about 1% and the output $V_7$ of the oscillator circuit OC2 is "low". When the output $V_4$ is "high", the oscillator circuit OC2 stops oscillating, when the output $V_7$ is raised to "high". The oscillator circuit OC3, on the other hand, oscillates when the output $V_7$ is "high". Under this condition, the duty factor is about 50%. When the output $V_7$ is "low", the oscillator circuit OC3 stops oscillating. Thus, when the output $V_4$ is "low", that is, under a stand-by condition in the absence of the input signal, the oscillator circuit OC2 oscillates at the duty factor of approximately 1%, while in response to an input signal, the output $V_4$ is raised to "high" state thereby to stop the oscillation of the oscillator OC2. The oscillator OC3 then oscillates at the duty factor of about 50%.

Apart from the system shown in Figs. 7 and 9, a system for controlling the voltage applied to a transformer may be used in view of the fact that the excitation loss of the transformer is substantially proportional to the square of the input voltage of the transformer.

A modification of the transmitter/receiver of the optical signal is shown in Fig. 12. An annular recess 45 is formed on the stator side and has a surface of a light reflecting material, including at least one photo-transistor 24. Another recess on the rotor side is also formed annular and has a surface of an optical reflecting material including an LED 25. This construction increases the accuracy of receiving the optical signal or reduces the number of the phototransistors 24. (Our experiments show that a sufficient optical signal is obtained by four photo-transistors 24 arranged at intervals of 90 degrees in a circle against one LED 25.)

It will be understood from the foregoing description that according to the present invention, there is provided a power supply system for the automotive parts having a rotary component in which a signal is transmitted without using any leading wire between the rotor side and stator side, and that, power is stably and efficiently supplied without any leading wire, thus providing a reliable, durable and maintenance-free power supply system for rotary components of the automobile which is capable of transmitting various types of signals on the one hand and does not consume the automotive battery unnecessarily even when power is supplied constantly on the other hand.

**Claims**

1. A system for supplying electric power to automotive parts having a rotary component, including a rotor and a stator,

a first coil (30) fixed on the stator (22);

a second coil (32) fixed on the rotor (15, 19) in opposed relation to said first coil;

means (OC1, Tr4, $D_3$) for supplying an AC voltage to said first coil; and

means ($D_4$, $C_3$) for rectifying the AC voltage induced in said second coil into a DC voltage, wherein said rotor includes signal generating means (44) and said rotor and said stator include spatial transmission means (LED, PTr) for transmitting the signal generated by said signal generator means from said rotor to said stator, characterized in that said stator includes means

(IN, CO2, OC3) for intensifying the excitation of said first coil for a predetermined length of time immediately following the generation of said signal and weakening said excitation for the remaining time.

2. A system according to claim 1, wherein said signal is an optical signal.

3. A system according to claim 1, wherein said signal is an ultrasonic wave.

4. A system according to claim 1, wherein said signal is an electromagnetic induction signal.

5. A system according to claim 1, wherein said rotor is a tire of an automobile.

6. A system for supplying electric power to a steering wheel used as an automotive part, including a rotor and a stator, wherein said rotor includes signal generator means (44), and said rotor and said stator include spatial transmission means (LED, PTr) for transmitting said signal from said rotor to said stator, characterized by
a first coil (30) fixed on the stator (22);
a second coil (32) fixed on the rotor (15, 19) in opposed relation to said first coil;
means (OC1, Tr4, $D_3$) for supplying an AC voltage to said first coil; and
means ($D_4$, $C_3$) for rectifying the AC voltage induced in said second coil into a DC voltage, wherein said stator includes means (IN, CO2, OC3) for intensifying the excitation of said first coil for a predetermined length of time immediately following the generation of said signal and weakening said excitation for the remaining time.

7. A system according to claim 6, wherein said signal is an optical signal.

8. A system according to claim 6, wherein said signal is an ultrasonic wave.

9. A system according to claim 6, wherein said signal is an electromagnetic induction signal.

## Patentansprüche

1. Vorrichtung zur Energieversorgung für Fahrzeugteile, die einen rotierenden Bestandteil aufweisen, mit
einem Rotor und einem Stator,
einer ersten Spule (30), die auf dem Stator (22) befestigt ist,
einer zweiten Spule (32), die auf dem Rotor (15, 19) der ersten Spule gegenüberliegend befestigt ist,
einer Einrichtung (OC1, Tr4, $D_3$) zur Einspeisung von Wechselspannung in die erste Spule, und
einer Einrichtung ($D_4$, $C_3$) die die in der zweiten Spule induzierte Wechselspannung in eine Gleichspannung gleichrichtet, wobei
der Rotor eine Signalgeneratoreinrichtung (44) und der Rotor und der Stator eine räumliche Übertragungseinrichtung (LED, PTr) aufweisen, um das vom Signalgenerator erzeugte Signal vom Rotor zum Stator zu übertragen, dadurch gekennzeichnet, daß der Stator eine Einrichtung (IN, CO2, OC3) aufweist, die die Anregung der ersten Spule für eine vorgegebene Zeitdauer unmittelbar auf die Erzeugung des Signals erhöht und die Anregung für die restliche Zeit abschwächt.

2. Vorrichtung nach Anspruch 1, dadurch gekennzeichnet, daß das Signal ein Lichtsignal ist.

3. Vorrichtung nach Anspruch 1, dadurch gekennzeichnet, daß das Signal ein Ultraschallsignal ist.

4. Vorrichtung nach Anspruch 1, dadurch gekennzeichnet, daß das Signal ein elektromagnetisches Induktionssignal ist.

5. Vorrichtung nach Anspruch 1, dadurch gekennzeichnet, daß der Rotor ein Rad eines Automobils ist.

6. Vorrichtung zur Energieversorgung eines als Fahrzeugteil dienenden Steuerrads, das einen Rotor und einen Stator aufweist, wobei der Rotor eine Signalgeneratoreinrichtung (44) und der Rotor und der Stator eine räumliche Übertragungseinrichtung (LED, PTr) aufweisen, um das Signal vom Rotor zum Stator zu übertragen, gekennzeichnet durch eine erste Spule (30), die auf dem Stator (22) befestigt ist,
eine zweite Spule (32), die auf dem Rotor (15, 19) der ersten Spule gegenüberliegend befestigt ist,
eine Einrichtung (OC1, Tr4, $D_3$) zur Einspeisung von Wechselspannung in die erste Spule, und
eine Einrichtung ($D_4$, $C_3$), die die in der zweiten Spule induzierte Wechselspannung in eine Gleichspannung gleichrichtet, wobei der Stator eine Einrichtung (IN, CO2, OC3) aufweist, die die Anregung der ersten Spule für eine vorgegebene Zeitdauer unmittelbar auf die Erzeugung des Signals verstärkt und die Anregung für die restliche Zeit abschwächt.

7. Vorrichtung nach Anspruch 6, dadurch gekennzeichnet, daß das Signal ein Lichtsignal ist.

8. Vorrichtung nach Anspruch 6, dadurch gekennzeichnet, daß das Signal ein Ultraschallsignal ist.

9. Vorrichtung nach Anspruch 6, dadurch gekennzeichnet, daß das Signal ein elektromagnetisches Induktionssignal ist.

## Revendications

1. Système d'alimentation pour élément de véhicule automobile ayant un composant tournant comprenant un rotor et un stator,
un premier enroulement (30) fixé sur le stator (22);
un second enroulement (32) fixé sur le rotor (15, 19), en opposition avec ledit premier enroulement;
des moyens (OC1, TR4, $D_3$) pour appliquer une tension alternative audit premier enroulement; et
des moyens ($D_4$, $C_3$) pour redresser la tension alternative induite dans ledit second enroulement en formant une tension continue, dans lequel ledit rotor comprend des moyens générateurs de signaux (44) et ledit rotor ainsi que ledit stator comprennent des moyens de transmission dans l'espace (LED, PTr) pour transmettre le signal généré par lesdits moyens générateurs de signaux dudit rotor audit stator, caractérisé par le fait que ledit stator comprend des moyens (IN, CO2, OC3) pour intensifier l'excitation dudit premier enroulement pendant une période de temps prédéterminée immédiatement après la génération dudit signal et pour affaiblir ladite excitation pendant le reste du temps.

2. Système selon la revendication 1, dans lequel ledit signal est un signal optique.

3. Système selon la revendication 1, dans lequel ledit signal est une onde ultrasonore.

4. Système selon la revendication 1, dans lequel ledit signal est un signal d'induction électromagnétique.

5. Système selon la revendication 1, dans lequel ledit rotor est un pneu d'automobile.

6. Système d'alimentation pour un volant utilisé dans un élément d'automobile, comprenant un rotor et un stator, dans lequel ledit rotor comprend des moyens générateurs de signaux (44), et ledit rotor et ledit stator comprennent des moyens de transmission dans l'espace (LED, PTr) pour transmettre ledit signal dudit rotor audit stator, caractérisé par

un premier enroulement (30) fixé sur le stator (22);

un second enroulement (32) fixé sur le rotor (15, 19), en opposition avec ledit premier enroulement;

des moyens (OC1, Tr4, $D_3$) pour appliquer une tension alternative audit premier enroulement; et

des moyens ($D_4$, $C_3$) pour redresser la tension alternative induite dans ledit second enroulement en formant une tension continue, dans lequel ledit stator comprend des moyens (IN, CO2, OC3) pour intensifier l'excitation dudit premier enroulement pendant une période de temps prédéterminé immédiatement après la génération dudit signal et pour affaiblir ladite excitation pendant le reste du temps.

7. Système selon la revendication 6, dans lequel ledit signal est un signal optique.

8. Système selon la revendication 6, dans lequel ledit signal est une onde ultrasonore.

9. Système selon la revendication 6, dans lequel ledit signal est un signal d'induction électromagnétique.

# FIG. 1
## PRIOR ART

# FIG. 2
## PRIOR ART

# FIG. 3

1

FIG. 4

FIG. 5

DRIVING CIRCUIT

FIG. 6

2

## FIG. 7

FIG. 8a  $V_1$

FIG. 8b  $V_2$

FIG. 8c  $V_3$  ----- Vth

FIG. 8d  HIGH $V_4$ LOW

FIG. 8e  $V_5$

FIG. 8f  $V_6$

FIG. 8g  $V_0$

TIME

0 087 138

0 087 138

FIG. 9

FIG. 10a  $V_1$

FIG. 10b  $V_2$  Vth

FIG. 10c  HIGH $V_3$ LOW

FIG. 10d  HIGH $V_4$ LOW

FIG. 10e  $V_5$

FIG. 10f  $V_6$

FIG. 10g  $V_0$  TIME

0 087 138

FIG. 11a

FIG. 11b

FIG. 12

FIG. 13